# EUROPÄISCHE PATENTANMELDUNG

(11) **EP 4 120 498 A1**
(43) Veröffentlichungstag der Anmeldung: **18.01.2023**
(21) Anmeldenummer: 21186153.9
(22) Anmeldetag: 16.07.2021
(51) Int. Cl.: H02J 3/00, H02J 13/00, H02J 3/12

(54) **VERFAHREN ZUR ERMITTLUNG EINES LEISTUNGSBEREICHES FÜR EINEN ANSCHLUSS EINER ANLAGE AN EIN STROMNETZ**

(71) Anmelder: Siemens Aktiengesellschaft, 80333 München (DE)
(72) Erfinder: Duckheim, Mathias, 91052 Erlangen (DE); Kolster, Till, 91054 Erlangen (DE)

(57) **Zusammenfassung**

Es wird ein Verfahren zur Ermittlung eines stromnetzspezifischen Leistungsbereiches einer Anlage, wobei die Anlage zum Anschluss an ein Stromnetz vorgesehen ist, und die Anlage innerhalb eines technischen Leistungsbereiches betreibbar ist, vorgeschlagen. Das Verfahren ist gekennzeichnet dadurch, dass das Ermitteln des stromnetzspezifischen Leistungsbereiches der Anlage durch ein Minimieren der Beschränkung ihres technischen Leistungsbereiches unter der Einhaltung von Netzrandbedingungen des Stromnetzes erfolgt.

Weiterhin betrifft die Erfindung ein Verfahren zur Steuerung eines Stromnetzes sowie eine Vorrichtung zur Durchführung des Verfahrens.

## Beschreibung

Die Erfindung betrifft ein Verfahren gemäß dem Oberbegriff des Patentanspruches 1, ein Verfahren gemäß dem Oberbegriff des Patentanspruches 11 sowie eine Vorrichtung gemäß dem Oberbegriff des Patentanspruches 12.

Bei einer Anbindung, einem Anschluss beziehungsweise einer Integration einer weiteren Anlage in ein bestehendes Verteilernetz beziehungsweise Stromnetz kann es zu Netzengpässen kommen. Somit ist es erforderlich, dass vorab des Anschlusses eines neuen Verbrauchers und/oder Erzeugers eine Prüfung erfolgt, ob durch den Anschluss der weiteren Anlage Netzengpässe entstehen. Diese Anschlussprüfung wird typischerweise manuell durch den Netzbetreiber des Stromnetzes durchgeführt.

Nach dem Stand der Technik wird beim Auftreten von Netzengpässen bei der Planung oder im Betrieb das Stromnetz ausgebaut beziehungsweise es erfolgen Abregelungen. Hierbei kann weiterhin vor dem Anschluss einer neuen beziehungsweise einer weiteren Anlage an einem Netzknoten des Stromnetzes eine Netzsimulation durchgeführt werden. Das Ergebnis dieser Simulation kann ein Netzausbau oder eine Drosselung der Spitzlast der Anlage sein.

Nachteilig hieran ist, dass bekannte Netzsimulationen offenlassen, mit welcher Leistung ein Verbraucher oder ein Erzeuger grundsätzlich angeschlossen werden kann. Das ist deshalb der Fall, da bekannte Netzsimulationen lediglich mit genau einer festgelegten Anschlussgröße durchgeführt werden können.

Der vorliegenden Erfindung liegt die Aufgabe zugrunde, ein verbessertes Verfahren zur Anbindung einer Anlage in ein bestehendes Stromnetz bereitzustellen.

Die Aufgabe wird durch ein Verfahren mit den Merkmalen des unabhängigen Patentanspruches 1, durch ein Verfahren mit den Merkmalen des unabhängigen Patentanspruches 11 sowie durch eine Vorrichtung mit den Merkmalen des unabhängigen Patentanspruches 12 gelöst. In den abhängigen Patentansprüchen sind vorteilhafte Ausgestaltungen und Weiterbildungen der Erfindung angegeben.

Gemäß dem erfindungsgemäßen Verfahren wird zum Anschluss einer Anlage an ein Stromnetz ein stromnetzspezifischer Leistungsbereich der Anlage ermittelt. Hierbei ist die Anlage zum Anschluss an das Stromnetz vorgesehen, und innerhalb eines technischen Leistungsbereiches betreibbar. Das Verfahren ist gekennzeichnet dadurch, dass das Ermitteln des stromnetzspezifischen Leistungsbereiches der Anlage durch ein Minimieren der Beschränkung ihres technischen Leistungsbereiches unter der Einhaltung von Netzrandbedingungen des Stromnetzes erfolgt.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird das Minimieren und somit das Ermitteln des stromnetzspezifischen Leistungsbereiches mittels einer Recheneinheit durchgeführt.

Das Stromnetz ist insbesondere ein Mittelspannungsnetz und/oder ein Niederspannungsnetz.

Die Anlage ist insbesondere eine Photovoltaikanlage, eine Ladesäule und/oder eine Wärmepumpe.

Der technische Leistungsbereich der Anlage ist der Leistungsbereich, in welchem die Anlage grundsätzlich betreibbar ist. Mit anderen Worten kennzeichnet dieser mit welcher Leistung die Anlage grundsätzlich betrieben werden kann. Der technische Leistungsbereich der Anlage ist somit im Gegensatz zum stromnetzspezifischen Leistungsbereich unabhängig von Stromnetz. Weiterhin kann der technische Leistungsbereich durch einen oder mehrere Leistungswerte (diskret) und/oder einen stetigen Leistungsbereich (kontinuierlich) gekennzeichnet sein.

Die Anlage kann somit grundsätzlich eine Leistung innerhalb ihres technischen Leistungsbereiches aus dem Stromnetz ausspeisen (Verbraucher) und/oder in das Stromnetz einspeisen (Erzeuger). Hierbei ist ihre Last beziehungsweise ihre Einspeiseleistung innerhalb ihres technischen Leistungsbereiches, beispielsweise mittels Steuerbefehle, steuerbar oder regelbar. Die Möglichkeit der Anlage innerhalb ihres technischen Leistungsbereiches betrieben werden zu können und gegebenenfalls ihre Leistung aufgrund von Steuerbefehlen zu ändern, wird als (Einzel-)Flexibilität bezeichnet. Die Anlage kann somit in diesem Sinne als flexible Anlage (FA) bezeichnet werden. In diesem Sinne bildet der technische Leistungsbereich einen Flexibilitätsbereich aus. Flexibilitätsbereiche sind somit Leistungsintervalle (diskret oder kontinuierlich), innerhalb welchen die Anlage eine solche Flexibilität bereitstellen kann.

Allerdings kann der Flexibilitätsbereich (technischer Leistungsbereich) der Anlage zu groß für einen technisch sicheren Betrieb des bestehenden Stromnetzes sein. Mit anderen Worten könnten es innerhalb des technischen Leistungsbereiches der Anlage zu unzulässigen Situationen innerhalb des Stromnetzes kommen.

Gemäß der vorliegenden Erfindung wird der technische Leistungsbereich der Anlage auf einen stromnetzspezifischen Leistungsbereich eingeschränkt. Hierbei erfolgt diese Einschränkung erfindungsgemäß derart, dass die Beschränkung des technischen Leistungsbereiches der Anlage, also ihre grundsätzliche technische Flexibilität, möglichst wenig eingeschränkt wird und gleichzeitig die Netzrandbedingungen im gesamten stromnetzspezifischen Leistungsbereich eingehalten werden. Mit anderen Worten erfolgt das Ermitteln des stromnetzspezifischen Leistungsbereiches der Anlage durch ein Minimieren der Beschränkung ihres technischen Leistungsbereiches unter der Einhaltung von Netzrandbedingungen des Stromnetzes. Der stromnetzspezifische Leistungsbereich bildet somit einen Teilbereich des technischen Leistungsbereiches aus. Typischerweise ist der stromnetzspezifische Leistungsbereich eine echte Teilmenge des technischen Leistungsbereiches.

Innerhalb des ermittelten stromnetzspezifischen Leistungsbereiches kann die Anlage ohne unzulässige Netzsituationen, beispielsweise Überlastungen, betrieben werden. Es wird somit eine möglichst minimale Limitierung der grundsätzlichen Flexibilität der Anlage unter einer Einhaltung aller Betriebsgrenzen des Stromnetzes ermittelt. Dadurch werden möglichst große Stellbereiche für die zu integrierende Anlage bereitgestellt.

Gemäß dem vorliegenden Verfahren werden bei der erfindungsgemäßen Ermittlung des stromnetzspezifischen Leistungsbereiches, das heißt bei der Ermittlung der bezüglich des Stromnetzes technisch sicheren Flexibilität, somit Einschränkungen der möglichen Arbeitspunkte der Anlage innerhalb des Stromnetzes berechnet. Dadurch kann eine verbesserte Planung für die Integration der Anlage erfolgen. Besonders vorteilhaft ist hierbei, dass die am Stromnetz angeschlossene Anlage ohne einen weiteren Netzausbau innerhalb des ermittelten stromnetzspezifischen Leistungsbereiches betrieben werden kann. Mit anderen Worten ist ein Ausbau des Stromnetzes bestenfalls nicht erforderlich. Somit kann bereits bei der Planung beziehungsweise Vorplanung ein kostenintensiver Netzausbau vermieden werden.

Weiterhin ist keine manuelle Anpassung der Anlage erforderlich, sodass sich der Planungsaufwand beziehungsweise Designaufwand deutlich reduziert. Zudem wird durch das erfindungsgemäße Minimieren der Einschränkung des technischen Leistungsbereiches ein möglichst optimales Ergebnis erreicht. In diesem Sinne bildet das erfindungsgemäße Verfahren ebenfalls ein Optimierungsverfahren aus, bei welchem unter Berücksichtigung der Netzrandbedingungen die Limitierung beziehungsweise Einschränkung des technischen Leistungsbereiches der Anlage minimiert wird. Mit anderen Worten wird der technische Leistungsbereich der Anlage - soweit bezüglich der Anlage technisch möglich - im Hinblick auf die Netzrandbedingungen maximiert.

Zum Betrieb, zur Planung und/oder zum Design eines Stromnetzes beziehungsweise der Anbindung einer neuen Anlage in das bestehende Stromnetz kann zudem eine virtuelle Anlage mit einem beliebig hohen technischen Leistungsbereich verwendet werden. Diese (virtuelle) Anlage wird zum Optimierungsprozess im Sinne der vorliegenden Erfindung hinzugefügt. Das Ergebnis der Minimierung beziehungsweise Optimierung ist somit das Ermitteln eines grundsätzlichen stromnetzspezifischen Leistungsbereiches, das heißt einer eingeschränkten technisch sicheren Flexibilität, die ohne einen Netzausbau in das bestehende Stromnetz integriert werden kann. Dies kann für einen oder mehrere Netzknoten des Stromnetzes durchgeführt werden, sodass für jeden Netzknoten ein grundsätzlicher stromnetzspezifischer Leistungsbereich ermittelt werden kann. In diesem Sinne bildet das Verfahren ebenfalls ein Designverfahren für ein Stromnetz aus, das bei der Planung des Stromnetzes und/oder bei der Planung der Integration einer Anlage in ein bestehendes Stromnetz verwendet werden kann.

Das erfindungsgemäße Verfahren zur Steuerung eines Stromnetzes, wobei an dem Stromnetz wenigstens eine Anlage angeschlossen ist, die innerhalb eines technischen Leistungsbereiches betreibbar ist, ist gekennzeichnet dadurch, dass die Anlage innerhalb eines gemäß einem der vorliegenden Erfindung und/oder einer ihrer Ausgestaltungen ermittelten stromspezifischen Leistungsbereiches betrieben wird.

Es ergeben sich zum erfindungsgemäßen Verfahren zur Ermittlung des stromnetzspezifischen Leistungsbereiches gleichartige und gleichwertige Vorteile und/oder Ausgestaltungen.

Die erfindungsgemäße Vorrichtung umfasst eine Recheneinheit und ist dadurch gekennzeichnet, dass die Recheneinheit zur Durchführung eines Verfahrens zur Ermittlung eines stromnetzspezifischen Leistungsbereiches und/oder zur Durchführung eines Verfahrens zur Steuerung gemäß der vorliegenden Erfindung und/oder einer ihrer Ausgestaltungen ausgebildet ist.

Mit anderen Worten ist die Vorrichtung bevorzugt als Steuervorrichtung beziehungsweise Regelvorrichtung für das Stromnetz ausgebildet.

Es ergeben sich zum erfindungsgemäßen Verfahren zur Ermittlung des stromnetzspezifischen Leistungsbereiches und/oder zum erfindungsgemäßen Verfahren zur Steuerung des Stromnetzes gleichartige und gleichwertige Vorteile und/oder Ausgestaltungen.

Gemäß einer vorteilhaften Ausgestaltung der Erfindung werden die Netzrandbedingungen als Nebenbedingungen beim Minimieren der Beschränkung des technischen Leistungsbereiches berücksichtigt.

Mit anderen Worten bildet das Minimieren der Beschränkung des technischen Leistungsbereiches ein Optimierungsverfahren aus. Optimierungsverfahren sind durch eine Zielfunktion und Nebenbedingungen gekennzeichnet. Bei der Optimierung, die typischerweise numerisch erfolgt, wird die Zielfunktion minimiert (oder analog maximiert) unter Einhaltung beziehungsweise Berücksichtigung der Nebenbedingungen. Vorliegend ist die Zielfunktion die Beschränkung des technischen Leistungsbereiches der Anlage. Die technischen Netzrandbedingungen werden als Nebenbedingungen modelliert und berücksichtigt. Die Netzrandbedingungen sind hierbei bevorzugt Spannungsgrenzen beziehungsweise einzuhaltende Spannungsbänder und/oder Anschlussleistungen.

In einer vorteilhaften Weiterbildung der Erfindung werden die Netzrandbedingung über mehrere Zeitschritte berücksichtigt.

Dadurch werden die Netzrandbedingungen vorteilhafterweise für mehrere Zeitpunkte beziehungsweise Zeitschritte eingehalten. Mit anderen Worten erfolgt vorteilhafterweise eine Art dynamischer Berücksichtigung.

Gemäß einer vorteilhaften Ausgestaltung der Erfindung wird weiterhin beim Minimieren berücksichtigt, dass steuernde Eingriffe in den Betrieb des Stromnetzes lediglich an bestimmten Zeitpunkten möglich sind.

Typischerweise sind Eingriffe in den Betrieb des Stromnetzes nur an bestimmten Zeitpunkten, beispielsweise zur Spitzenkappung, möglich. Dies kann vorteilhafterweise beim Minimieren berücksichtigt werden.

In einer vorteilhaften Weiterbildung der Erfindung ist die Anlage zur Einspeisung in das Stromnetz ausgebildet, und der technische Leistungsbereich der Anlage wird durch eine minimale und maximale Einspeiseleistung begrenzt.

Mit anderen Worten ist die Anlage als Stromerzeugungsanlage (Erzeuger) ausgebildet und der technische Leistungsbereich der Anlage weist eine Minimalleistung sowie eine Maximalleistung auf. Zwischen der Minimalleistung und der Maximalleistung kann die Anlage gemäß diskreter Leistungsschritte und/oder kontinuierlich bezüglich ihrer Leistung betrieben werden. Vorliegend wird somit der durch die Minimalleistung und Maximalleistung begrenzte technische Arbeitsbereich/Leistungsbereich der Anlage möglichst wenig eingeschränkt. Erfolgt gemäß der Minimierung der Beschränkung des technischen Leistungsbereiches eine Beschränkung des technischen Leistungsbereiches, so ist diese typischerweise durch eine reduzierte Maximalleistung gekennzeichnet. Mit anderen Worten wird vorteilhafterweise eine reduzierte Maximalleistung ermittelt. Der stromspezifische Leistungsbereich ist in diesem Fall durch die technische Minimalleistung und der ermittelten reduzierten Maximalleistung gekennzeichnet. Die Minimalleistung kann den Wert Null aufweisen. Bevorzugt ist die Anlage als Photovoltaikanlage ausgebildet, die beispielsweise einen regelbaren Wechselrichter zur Leistungssteuerung beziehungsweise Leistungsregelung, umfasst.

Gemäß einer vorteilhaften Ausgestaltung der Erfindung wird der stromnetzspezifische Leistungsbereich für mehrere Netzknoten des Stromnetzes, insbesondere für alle Netzknoten des Stromnetzes, ermittelt.

Dadurch kann vorteilhafterweise für mehrere Netzknoten, insbesondere für alle Netzknoten, ein stromnetzspezifischer Leistungsbereich für das bestehende Stromnetz ermittelt werden. Somit wird für jeden Netzknoten des bestehenden Stromnetzes ermittelt, welche Leistung eine am jeweiligen Netzknoten angeschlossene Anlage aufweisen darf, ohne die Netzrandbedingungen des Stromnetzes zu verletzen. Dadurch kann eine optimale Positionierung der Anlage innerhalb des Stromnetzes ermittelt werden. Weiterhin kann eine virtuelle Anlage, das heißt eine Anlage mit einem beliebig großen technischen Leistungsbereich verwendet werden, um die netzknotenaufgelösten maximalen stromnetzspezifischen Leistungsbereiche zu ermitteln.

In einer vorteilhaften Weiterbildung der Erfindung wird die Anlage an dem Netzknoten mit dem größten stromnetzspezifischen Leistungsbereich angeschlossen.

Dadurch wird vorteilhafterweise sichergestellt, dass die Anlage mit dem größten Leistungsbereich betrieben werden kann, der unter Einhaltung der Netzrandbedingungen möglich ist. Ist beispielsweise der technische Leistungsbereich durch eine maximale Leistung begrenzt, so wird die Anlage an dem Netzknoten installiert, an welchem die Reduzierung der maximalen Leistungen der Anlage am geringsten ist.

Gemäß einer vorteilhaften Ausgestaltung der Erfindung umfasst die Anlage mehrere Teilanlagen, wobei der technische Leistungsbereich der Anlage durch die technischen Leistungsbereiche der einzelnen Teilanlagen gebildet wird.

Mit anderen Worten umfasst der technische Leistungsbereich der Anlage mehrere technische Teilleistungsbereiche. Die Teilleistungsbereiche können hierbei wenigstens teilweise überlappen und/oder disjunkt sein. Der technische Leistungsbereich kann somit ebenfalls eine nichtzusammenhängende Menge von Leistungsbereichen sein. Alternativ oder ergänzend kann für das Ermitteln des stromnetzspezifischen Leistungsbereiches für mehrere Anlagen ein effektiver zusammenhängender Leistungsbereich verwendet werden, der durch die minimale Minimalleistung der Teilanlagen und die maximale Maximalleistung der Teilanlagen gebildet ist.

In einer vorteilhaften Weiterbildung der Erfindung ist die Anlage als Ladesäule ausgebildet.

Die vorliegende Erfindung ist besonders für Ladesäulen vorteilhaft. Das ist deshalb der Fall, da dadurch ein bestmöglicher Standpunkt der Ladesäule innerhalb des Stromnetzes sowie eine maximale Ladeleistung ohne Verletzung von Netzrandbedingungen ermittelt werden kann. Somit können im Hinblick auf die Elektromobilität mehrere Ladesäulen in ein bestehendes Stromnetz bestmöglich und mit einem möglichst geringen Netzausbau integriert werden.

Gemäß einer vorteilhaften Ausgestaltung der Erfindung wird für das Minimieren ein numerisches Optimierungsverfahren basierend auf einer Zielfunktion durchgeführt, wobei die Zielfunktion durch die Beschränkung des technischen Leistungsbereiches gebildet wird, und die Netzrandbedingungen eine oder mehrere Nebenbedingungen des Optimierungsverfahrens ausbilden.

Vorteilhafterweise kann dadurch eine effiziente und schnelle Ermittlung des stromnetzspezifischen Leistungsbereiches, insbesondere für alle Netzknoten des Stromnetzes erfolgen. Weiterhin können dadurch bekannte numerische Löser (englisch: Solver) für das Ermitteln der stromnetzspezifischen Leistungsbereiche verwendet werden. Eine vorteilhafte Ermittlung mittels eines Quantencomputers ist durch die Ausbildung eines Optimierungsproblems ebenfalls denkbar und vorgesehen.

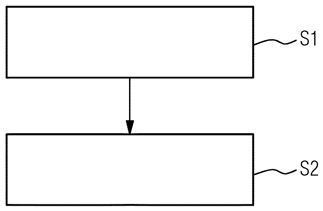

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur ein schematisiertes Ablaufdiagramm eines Verfahrens zur Ermittlung eines stromnetzspezifischen Leistungsbereiches einer Anlage gemäß einer Ausgestaltung der vorliegenden Erfindung.

Gleichartige, gleichwertige oder gleichwirkende Elemente können in der Figur mit denselben Bezugszeichen versehen sein.

Das gemäß der Figur dargestellte Verfahren betrifft ein Verfahren zur Ermittlung eines stromnetzspezifischen Leistungsbereiches einer Anlage, wobei die Anlage ohne Verletzung von Netzrandbedingungen innerhalb des ermittelten stromnetzspezifischen Leistungsbereiches angebunden werden kann, ohne Netzrandbedingungen des Stromnetzes zu verletzen. Die Anlage ist somit für eine Anbindung an das Stromnetz vorgesehen.

Grundsätzlich weist die Anlage einen technischen Leistungsbereich auf, innerhalb welchen die Anlage grundsätzlich technisch betrieben werden kann. Typischerweise ist der technische Leistungsbereich der Anlage von ihrem stromnetzspezifischen Leistungsbereich verschieden. Der technische Leistungsbereich ist typischerweise größer als der stromnetzspezifische Leistungsbereich. Weiterhin ist der stromnetzspezifische Leistungsbereich typischerweise vom Stromnetz sowie vom Netzknoten, an welchem die Anlage angeschlossen werden soll, abhängig.

In einem ersten Schritt S1 des Verfahrens wird die Anlage und/oder der technische Leistungsbereich der Anlage bereitgestellt. Dadurch ist bekannt, in welchem Leistungsbereich die Anlage grundsätzlich technisch betreibbar ist, beispielsweise zwischen 0 und 10 kW.

Gemäß einem zweiten Schritt S2 des Verfahrens wird ein stromnetzspezifischer Leistungsbereich der Anlage durch ein Minimieren der Beschränkung ihres technischen Leistungsbereiches unter der Einhaltung von Netzrandbedingungen des Stromnetzes ermittelt. Der stromnetzspezifische Leistungsbereich ist typischerweise ein Teilbereich des technischen Leistungsbereiches, beispielsweise von 0 bis 7 kW. Weiterhin ist der stromnetzspezifische Leistungsbereich vom Stromnetz und vom Anschlusspunkt innerhalb des Stromnetzes, das heißt vom Netzknoten, an welchem die Anlage angeschlossen werden soll oder angeschlossen wird, abhängig.

Das obenstehend beschriebene Verfahren kann durch eine hierzu ausgebildete Vorrichtung durchgeführt werden. Die Vorrichtung kann hierzu einen modularen Aufbau ihrer Software mit einheitlichen Datenschnittstellen aufweisen. Die einheitlichen Datenschnittstellen ermöglichen es, dass einzelne Komponenten der Software unabhängig ihres Umfeldes verwendet werden können, sodass beispielsweise die Optimierung ohne eine Leitwartenumgebung durchgeführt werden kann. Die externen Schnittstellen sind ebenfalls modular und können aufgrund der Datengrundlage derer die Entscheidung ermittelt werden sollen effizient angepasst oder eingestellt werden.

Eine weitere Möglichkeit der vorteilhaften Verwendung des Verfahrens ist zur Netzausbauplanung. Hierbei können beispielsweise die Kosten einer Flexibilitätslimitierung mit Netzausbaukosten verglichen werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt

## Patentansprüche

1. Verfahren zur Ermittlung eines stromnetzspezifischen Leistungsbereiches einer Anlage, wobei die Anlage zum Anschluss an ein Stromnetz vorgesehen ist, und die Anlage innerhalb eines technischen Leistungsbereiches betreibbar ist, **gekennzeichnet dadurch, dass** das Ermitteln des stromnetzspezifischen Leistungsbereiches der Anlage durch ein Minimieren der Beschränkung ihres technischen Leistungsbereiches unter der Einhaltung von Netzrandbedingungen des Stromnetzes erfolgt.

2. Verfahren gemäß Anspruch 1, **gekennzeichnet dadurch, dass** die Netzrandbedingungen als Nebenbedingungen beim Minimieren der Beschränkung des technischen Leistungsbereiches berücksichtigt werden.

3. Verfahren gemäß Anspruch 2, **gekennzeichnet dadurch, dass** die Netzrandbedingung über mehrere Zeitschritte berücksichtigt werden.

4. Verfahren gemäß Anspruch 3, **gekennzeichnet dadurch, dass** weiterhin beim Minimieren berücksichtigt wird, dass steuernde Eingriffe in den Betrieb des Stromnetzes lediglich an bestimmten Zeitpunkten möglich sind.

5. Verfahren gemäß einem der vorhergehenden Ansprüche, **gekennzeichnet dadurch, dass** die Anlage zur Einspeisung in das Stromnetz ausgebildet ist, und der technische Leistungsbereich der Anlage durch eine minimale und maximale Einspeiseleistung begrenzt wird.

6. Verfahren gemäß einem der vorhergehenden Ansprüche, **gekennzeichnet dadurch, dass** der stromnetzspezifische Leistungsbereich für mehrere Netzknoten des Stromnetzes, insbesondere für alle Netzknoten des Stromnetzes, ermittelt wird.

7. Verfahren gemäß Anspruch 6, **gekennzeichnet dadurch, dass** die Anlage an dem Netzknoten mit dem größten stromnetzspezifischen Leistungsbereich angeschlossen wird.

8. Verfahren gemäß einem der vorhergehenden Ansprüche, **gekennzeichnet dadurch, dass** die Anlage mehrere Teilanlagen umfasst, wobei der technische Leistungsbereich der Anlage durch die technischen Leistungsbereiche der einzelnen Teilanlagen gebildet wird.

9. Verfahren gemäß einem der vorhergehenden Ansprüche, **gekennzeichnet dadurch, dass** die Anlage als Ladesäule ausgebildet ist.

10. Verfahren gemäß einem der vorhergehenden Ansprüche, **gekennzeichnet dadurch, dass** für das Minimieren ein numerisches Optimierungsverfahren basierend auf einer Zielfunktion durchgeführt wird, wobei die Zielfunktion durch die Beschränkung des technischen Leistungsbereiches gebildet wird, und die Netzrandbedingungen eine oder mehrere Nebenbedingungen des Optimierungsverfahrens ausbilden.

11. Verfahren zur Steuerung eines Stromnetzes, wobei an dem Stromnetz wenigstens eine Anlage angeschlossen ist, die innerhalb eines technischen Leistungsbereiches betreibbar ist, **gekennzeichnet dadurch, dass** die Anlage innerhalb eines gemäß einem der vorhergehenden Ansprüche ermittelten stromspezifischen Leistungsbereiches betrieben wird.

12. Vorrichtung, umfassend eine Recheneinheit, **dadurch gekennzeichnet, dass** die Recheneinheit zur Durchführung eines Verfahrens gemäß einem der vorhergehenden Ansprüche ausgebildet ist.
